# EUROPÄISCHE PATENTANMELDUNG

(11) **EP 4 310 271 A1**
(43) Veröffentlichungstag der Anmeldung: **24.01.2024**
(21) Anmeldenummer: 23000067.1
(22) Anmeldetag: 27.04.2023
(51) Int. Cl.: E04F 13/08

(54) **KONSOLANKER**

(30) Priorität: 22.07.2022 DE 102022002680
(71) Anmelder: PohlCon GmbH, 12057 Berlin (DE)
(72) Erfinder: Yilmaz, Dersu, D-12105 Berlin (DE); Stibitz, Nico, D-14513 Teltow (DE); Rössel, Henning, D-13187 Berlin (DE); Mülow, Stephan, D-14974 Ludwigsfelde (DE)
(74) Vertreter: Jungblut & Seuss

(57) **Zusammenfassung**

Die Erfindung betrifft einen Konsolanker (1) zur Befestigung einer Verblendung (2) an einem Bauwerk (3), wobei der Konsolanker (1) einen Konsolkopf (4) zur Befestigung des Konsolankers (1) an dem Bauwerk (3), ein Stegelement (5), ein Auflagerelement (6) zur Abstützung der Verblendung (2) und ein Druckelement (7) zur Druckübertragung vom Konsolanker (1) auf das Bauwerk (3) umfasst, wobei das Auflagerelement (6) und das Druckelement (7) am Stegelement (5) festgelegt sind, wobei das Stegelement (5) eine Zugstrebe (8) und eine Druckstrebe (9) umfasst, und wobei die Zugstrebe (8) und die Druckstrebe (9) lediglich an ihren dem Auflagerelement (6) zugewandten Enden miteinander verbunden sind. Sie ist dadurch gekennzeichnet, dass das Stegelement (5) zumindest zweiteilig ausgebildet ist, wobei die Zugstrebe (8) und die Druckstrebe (9) miteinander kraft-, form-, oder stoffschlüssig verbunden sind.

## Beschreibung

### Gebiet der Erfindung

Die Erfindung betrifft einen Konsolanker zur Befestigung einer Verblendung an einem Bauwerk, wobei der Konsolanker einen Konsolkopf zur Befestigung des Konsolankers an dem Bauwerk, ein Stegelement, ein Auflagerelement zur Abstützung der Verblendung und ein Druckelement zur Druckübertragung vom Konsolanker auf das Bauwerk umfasst, wobei das Auflagerelement und das Druckelement am Stegelement festgelegt sind, wobei das Stegelement eine Zugstrebe und eine Druckstrebe umfasst, und wobei die Zugstrebe und die Druckstrebe lediglich an ihren dem Auflagerelement zugewandten Enden miteinander verbunden sind.

### Stand der Technik und Hintergrund der Erfindung

Konsolanker des eingangs genannten Aufbaus sind beispielsweise aus der Literaturstelle EP 3 239 431 A1 bekannt. Bei diesem insofern bekannten Konsolanker ist das Stegelement aus einem Stück gefertigt, typischerweise aus einem Blech ausgestanzt oder ausgeschnitten. Deswegen wird es dort auch "Stegblech" genannt. Dies bedingt zwingend, dass die Zugstrebe und die Druckstrebe gleiche Dicke aufweisen, nämlich die Dicke des Bleches, aus welchen das Stegelement ausgeformt wird. Dies führt zu Zwängen in der statischen Konzeption, bei der beispielsweise sichergestellt muss, dass die Druckstrebe unter Belastung nicht ausknickt. Dies bedingt entweder ein insgesamt sehr dickes Stegelement, oder, wie in besagter Literaturstelle beschrieben, die Notwendigkeit eine Abwinkelung an der Druckstrebe anzubringen, sei es durch Abkantung, sei es durch Anfügen. Dies ist aufwändig und legt zudem bei der statischen Dimensionierung der Elemente des Konsolankers Zwänge auf, die letztlich auch in einem Gesamtgewicht resultieren, das verbesserungsfähig ist.

Bei dem insofern bekannten Konsolanker wird das Stegelement aus einem Blech ausgeschnitten. Dabei entsteht zwangsläufig ein Verschnitt, da sich das komplex geformte Stegelement nicht so oft auf das Blech-Halbzeug projizieren lässt, dass kein Verschnitt entsteht. Dies stört vor dem Hintergrund knapper und teurer werdender Rohstoffe und Energieressourcen.

Konsolanker sind des Weiteren bekannt aus den Dokumenten DE 10 2020 111 864 A1 und EP 3 489 430 A1. In beiden Fällen sind die Druckstreben stangenförmig ausgebildet, was statische Nachteile mit sich bringt.

### Technisches Problem der Erfindung

Der Erfindung liegt daher das technische Problem zugrunde, einen Konsolanker anzugeben, der einfach herzustellen, in der Dimensionierung und Optimierung der Elemente besonders flexibel und Ressourcen schonend herstellbar ist.

### Grundzüge der Erfindung und bevorzugte Ausführungsformen

Zur Lösung dieses technischen Problems lehrt die Erfindung, dass das Stegelement zumindest zweiteilig ausgebildet ist, wobei die Zugstrebe und die Druckstrebe plattenförmig ausgebildet und miteinander kraft-, form- oder stoffschlüssig verbunden sind.

Eine plattenförmige Ausbildung bezeichnet eine Ausbildung mit im Wesentlichem rechteckigem Querschnitt, wobei die Hauptflächen der Platten im wesentlichen Vertikal stehen.

Mit der Erfindung werden mehrere Vorteile in Kombination miteinander erreicht.

Zunächst wird es möglich, die Zugstrebe und die Druckstrebe völlig frei von Zwängen unabhängig voneinander zu dimensionieren. Dies erlaubt es insbesondere, die Druckstrebe zur Sicherung gegen Ausknicken in ihrer Dicke so zu dimensionieren, dass der Querschnitt und somit der Materialverbrauch minimiert wird und auf zusätzliche Elemente zur Verhinderung eines Ausknickens an der Druckstrebe verzichtet werden kann. Insbesondere kann auf winkelig zur Druckstrebe stehende Versteifungselemente verzichtet werden.

Des Weiteren wird es möglich bei der Druckstrebe und der Zugstrebe auf variable Breiten, in Richtungen der Längserstreckung, zu verzichten. Dadurch kommt als Halbzeug insbesondere Bandmaterial in Frage von dem die Druckstrebe und die Zugstrebe in der benötigten Länge abgeschnitten werden. Dadurch gibt es nahezu keinen Verschnitt und es wird sehr vorteilhaft hinsichtlich des Materialeinsatzes und der damit verbundenen Kosten gearbeitet.

Auch ist es möglich zugleich mit der statischen Optimierung eine Optimierung der Wärmeleitfähigkeit durch Materialwahl und Dimensionierung der Komponenten des Konsolankers zu erreichen, in dem Sinne, dass die Wärmeleitung zwischen Verblendung und Bauwerk minimiert wird.

Die vorstehend genannten Vorteile überkompensieren den zusätzlichen Arbeitsschritt bei der Herstellung, welcher in der Verbindung von Druckstrebe und Zugstrebe besteht, in erheblicher Weise.

Im Rahmen der Erfindung sind verschiedene vorteilhafte Weiterbildungen möglich.

So kann die Zugstrebe eine Dicke d1 und die Druckstrebe eine Dicke d2 aufweisen, wobei d1 und d2 im Wesentlichen gleich sind. Wenn zugleich die Breiten b1 und b2 gleich und in Richtung der Längserstreckung der Zugstrebe und/oder der Druckstrebe konstant sind, dann wird für das Stegelement ein einziges Bandmaterial als Halbzeug benötigt. Dies ist für den Produktionsablauf und die Materialbevorratung besonders vorteilhaft.

Natürlich ist es erforderlichenfalls auch möglich, die Breiten b1 und b2 in Längserstreckung der Druckstrebe und/oder der Zugstrebe variabel bzw. veränderlich zu gestalten.

Es kann aber auch vorgesehen sein, dass d1 und d2 verschieden sind. So kann das Verhältnis der Dicken d1/d2 im Bereich von 1:1,01 bis 1:5, insbesondere 1:1,01 bis 1:2, liegen. Dann können die Druckstrebe und die Zugstrebe unabhängig voneinander statisch optimiert werden, wodurch ein möglichst geringes Gesamtgewicht erzielt wird. Dies ist einerseits bei der Anwendung des fertigen Konsolankers an der Baustelle vorteilhaft, da geringere Gewichte vor Ort zu handhaben sind. Andererseits werden wertvolle Materialressourcen optimal ausgenutzt.

Unter bestimmten Umständen kann eine optimale statische Dimensionierung es wünschenswert werden lassen, dass die Breiten b1 und b2 verschieden sind. Das Verhältnis der Breiten b1/b2 kann dann im Bereich zwischen 1,0 und 0,1 liegen, insbesondere im Bereich zwischen 0,8 und 0,3.

Die Dicken d1 und d2 liegen typischerweise im Bereich von 1 bis 20 mm, insbesondere von 1 bis 10 mm. Die Breiten b1 und b2 liegen typischerweise im Bereich von 80 bis 10 mm, insbesondere von 50 bis 20 mm.

Zugstrebe und Druckstrebe stehen zweckmäßigerweise in einem Winkel von 20 bis 70°, insbesondere von 40 bis 50°, wobei der Winkel zwischen den Mittelachsen der Druckstrebe und der Zugstrebe gemessen ist.

Vorteilhafterweise bestehen zumindest die Zugstrebe (8) und die Druckstrebe (9), vorzugsweise auch der Konsolkopf (4), das Druckelement (7) und/oder das Auflagerelement (6) aus einem metallischen Werkstoff, insbesondere aus einer Aluminiumlegierung oder einer Stahllegierung.

Grundsätzlich kommt jegliche fachübliche Weise der festen Aneinanderfügung von Druckstrebe und Zugstrebe (und auch der anderen Komponenten des Konsolankers and der Zug- und/oder Druckstrebe) in Frage. Beispielsweise können die Zugstrebe und die Druckstrebe miteinander verschraubt, vernietet, oder verschweißt sein.

Das Auflagerelement, Druckelement und der Konsolkopf können in allen fachüblichen Weisen ausgebildet und dimensioniert sein.

Erfindungsgemäße Konsolanker können für beliebige Verblendungen eingesetzt werden. Es kommen in Frage Fassadenplatten aus beliebigem Material, Dämmplatten, Betonfertigteile, beispielsweise Sandwichelemente, Steine, insbesondere Mauersteine, oder Steinplatten.

Bauwerke können Wohngebäude oder gewerblich nutzbare Gebäude sein, aber auch Kleingebäude, wie Garagen und dergleichen. Typischerweise wird ein erfindungsgemäßer Konsolanker an dem Tragwerk aus Stahlbeton angebracht.

Im Folgenden wird die Erfindung anhand von lediglich Ausführungsbeispiele darstellenden Figuren näher erläutert. Es zeigen
- Figur 1:: eine Seitenansicht eines erfindungsgemäßen Konsolankers und
- Figur 2:: eine perspektivische Ansicht eines erfindungsgemäßen Konsolankers

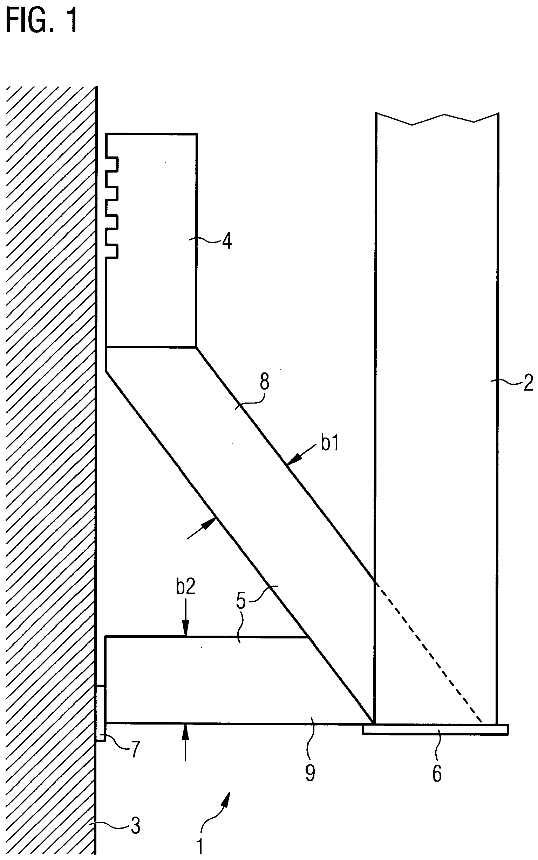

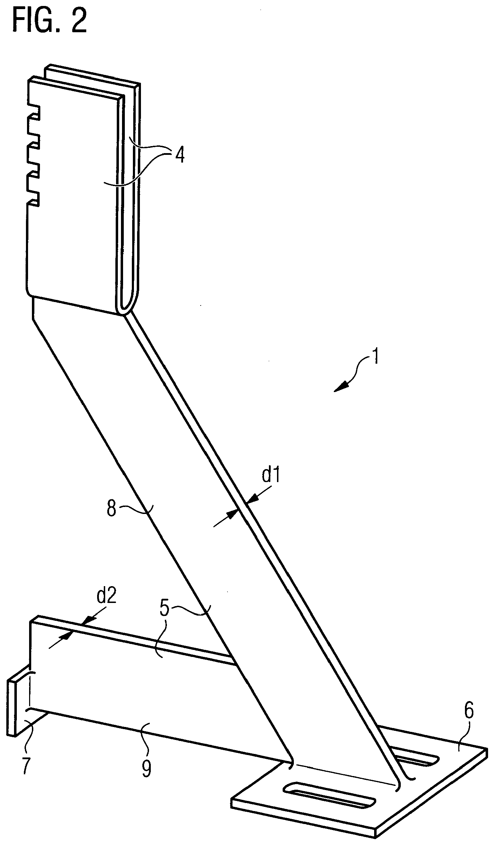

In den Figur 1 erkennt man eine Konsolanker 1 zur Befestigung einer Verblendung 2 an einem Bauwerk 3. Einer vergleichenden Betrachtung der Figuren 1 und 2 entnimmt man, dass der Konsolanker 1 einen Konsolkopf 4 zur Befestigung des Konsolankers 1 an dem Bauwerk 3, ein Stegelement 5, ein Auflagerelement 6 zur Abstützung der Verblendung 2 und ein Druckelement 7 zur Druckübertragung vom Konsolanker 1 auf das Bauwerk 3 umfasst. Das Auflagerelement 6 und das Druckelement 7 sind am Stegelement 5 festgelegt, im Ausführungsbeispiel angeschweißt. Das Stegelement 5 umfasst eine Zugstrebe 8 und eine Druckstrebe 9. Die Zugstrebe 8 und die Druckstrebe 9 sind lediglich an ihren dem Auflagerelement 6 zugewandten Enden miteinander verbunden, im Ausführungsbeispiel miteinander verschweißt. Das Stegelement 5 ist zweiteilig ausgebildet.

Die Zugstrebe 8 weist eine Dicke d1 und die Druckstrebe 9 eine Dicke d2 auf, wobei d1 und d2 im Wesentlichen gleich sind. Alternativ können d1 und d2 verschieden sein.

Die Zugstrebe 8 weist eine Breite b1 und die Druckstrebe 9 eine Breite b2 auf, welche in Richtung der Längserstreckung der Zugstrebe (8) und/oder der Druckstrebe (9) im Ausführungsbeispiel konstant ist. Des Weiteren sind die Breiten b1 und b2 gleich. Im Ergebnis lassen sich die Druckstrebe und die Zugstrebe aus ein und demselben Bandmaterial abschneiden.

Die Zugstrebe 8, die Druckstrebe 9, der Konsolkopf 4, das Druckelement 7 und das Auflagerelement 6 sind aus einer Stahllegierung, beispielsweise Edelstahl, ausgebildet. Edelstahl gewährleistet eine vergleichsweise niedrige Wärmeleitfähigkeit des Konsolanker 1. Die vorstehenden Elemente sind allesamt miteinander verschweißt.

## Patentansprüche

1. Konsolanker (1) zur Befestigung einer Verblendung (2) an einem Bauwerk (3), wobei der Konsolanker (1) einen Konsolkopf (4) zur Befestigung des Konsolankers (1) an dem Bauwerk (3), ein Stegelement (5), ein Auflagerelement (6) zur Abstützung der Verblendung (2) und ein Druckelement (7) zur Druckübertragung vom Konsolanker (1) auf das Bauwerk (3) umfasst, wobei das Auflagerelement (6) und das Druckelement (7) am Stegelement (5) festgelegt sind, wobei das Stegelement (5) eine Zugstrebe (8) und eine Druckstrebe (9) umfasst, und wobei die Zugstrebe (8) und die Druckstrebe (9) lediglich an ihren dem Auflagerelement (6) zugewandten Enden miteinander verbunden sind,
**dadurch gekennzeichnet,**
**dass** das Stegelement (5) zumindest zweiteilig ausgebildet ist, wobei die Zugstrebe (8) und die Druckstrebe (9) plattenförmig ausgebildet und miteinander kraft-, form- oder stoffschlüssig verbunden sind.

2. Konsolanker (1) nach Anspruch 1, **dadurch gekennzeichnet, dass** die Zugstrebe (8) eine Dicke d1 und die Druckstrebe (9) eine Dicke d2 aufweisen, wobei d1 und d2 im Wesentlichen gleich sind.

3. Konsolanker (1) nach Anspruch 1, **dadurch gekennzeichnet, dass** die Zugstrebe (8) eine Dicke d1 und die Druckstrebe (9) eine Dicke d2 aufweisen, wobei d1 und d2 gleich oder verschieden sind.

4. Konsolanker (1) nach Anspruch 3, **dadurch gekennzeichnet, dass** das Verhältnis der Dicken d1/d2 im Bereich von 1:1 bis 1:5, insbesondere 1:1 bis 1:2, liegt

5. Konsolanker (1) nach einem der Ansprüche 1 bis 4, **dadurch gekennzeichnet, dass** die Zugstrebe (8) eine Breite b1 und/oder die Druckstrebe (9) eine Breite b2 aufweist, welche in Richtung der Längserstreckung der Zugstrebe (8) und/oder der Druckstrebe (9) variabel oder konstant ist.

6. Konsolanker (1) nach einem der Ansprüche 1 bis 5, **dadurch gekennzeichnet, dass** die Breiten b1 und b2 gleich sind.

7. Konsolanker (1) nach einem der Ansprüche 1 bis 5, **dadurch gekennzeichnet, dass** die Breiten b1 und b2 verschieden sind.

8. Konsolanker (1) nach Anspruch 7, **dadurch gekennzeichnet, dass** das Verhältnis der Breiten b1/b2 im Bereich zwischen 1,0 und 0,1 liegt, insbesondere im Bereich zwischen 0,8 und 0,3.

9. Konsolanker (1) nach einem der Ansprüche 1 bis 8, **dadurch gekennzeichnet, dass** zumindest die Zugstrebe (8) und die Druckstrebe (9), vorzugsweise auch der Konsolkopf (4), das Druckelement (7) und/oder das Auflagerelement (6) aus einem metallischen Werkstoff, insbesondere aus einer Aluminiumlegierung oder Stahllegierung, ausgebildet sind.

10. Konsolanker (1) nach einem der Ansprüche 1 bis 8, **dadurch gekennzeichnet, dass** zumindest die Zugstrebe (8) und die Druckstrebe (9) miteinander verschraubt, vernietet, oder verschweißt sind.
